# EUROPEAN PATENT SPECIFICATION

(11) **EP 2 451 264 B1**
(45) Date of publication and mention of the grant of the patent: **23.08.2017**
(21) Application number: 09847153.5
(22) Date of filing: 09.07.2009
(51) Int. Cl.: A01D 34/416, A01G 3/06

(54) **ELECTRICAL TWO-WAY ROTARY TRIMMER**
ELEKTRISCHER ZWEIWEGE-ROTATIONSTRIMMER
COUPE BORDURE ÉLECTRIQUE ROTATIF BIDIRECTIONNEL

(43) Date of publication of application: 16.05.2012
(73) Proprietor: Husqvarna AB, 561 82 Huskvarna (SE)
(72) Inventor: RACOV, Mikael, 560 28 Lekeryd (SE); SVENNUNG, Johan, 553 36 Jönköping (SE); HEROU, Mia, 553 23 Jönköping (SE)
(86) International application number: PCT/SE2009/050887
(87) International publication number: WO 2011/005156

(56) References cited:
- EP-A1- 0 792 575
- GB-A- 2 394 879
- JP-A- 9 233 929
- JP-A- H09 233 929
- JP-A- 2004 248 523
- JP-A- 2006 314 277
- JP-A- 2006 314 278
- US-A- 4 317 282
- US-A- 5 836 227
- US-A- 6 052 976
- US-A1- 2005 039 583
- US-A1- 2006 248 731
- US-A1- 2007 247 095
- US-B1- 6 260 278

## Description

### Field of the invention

This invention relates to a electrical trimmer for cutting grass or other vegetation. The electrical trimmer comprises a rotary cutting equipment and an electrical motor for driving the rotary cutting equipment,

### Background

When trimming in a garden, the grass cut by the trimmer is thrown in a certain direction. To control that direction one has to walk in a certain direction along the cutting path for the grass to end up on, for instance, the lawn instead of the pavement.

Hence, there is a need for a handheld electrical trimmer that can control the direction in which the cut grass is thrown when trimming in a garden without the operator having to walk in a certain direction or hold the trimmer in a certain angle. There is also a need to enable the direction change to be accomplished during operation since existing heavy brush cutting equipment such as that of U.S. Pub. No. 2006/0248731 to Suzuki et al., JP2006 314278, JP2006 314277, and JP H09 233929, although rotatable in two directions, requires stopping of the equipment prior to initiating a direction change.

### Summary of the invention

It order to solve the above problem a handheld electrical trimmer is provided according to the preamble of claim 1 and which is characterized in that the electrical trimmer comprises a switching means for changing the rotation direction of the electrical motor drive between
clockwise and counterclockwise rotation for rotation of the rotary cutting equipment. Hence, the rotation direction of the cutting equipment is controllable and the direction in which the cut grass is thrown can thereby be controlled.

Embodiments of the invention are presented in the dependent claims, as well as in the following description and drawings.

According to the present invention, an electrical trimmer for rotary cutting is provided, comprising a rotary cutting equipment for cutting grass or other vegetation, and an electrical motor for driving the rotary cutting equipment, characterized in that the electrical trimmer comprises a switching means for changing the rotation direction of the electrical motor drive between
clockwise and counterclockwise rotation for the rotation of the rotary cutting equipment.

This gives an electrical trimmer that with a simple change of a switching means changes the rotation direction and the grass that is cut may be thrown in the opposite direction.

In one embodiment, the rotation direction of the electrical motor may be changed, by using the switching means, during operation of the trimmer. This means the motor does not have to be stopped before the rotation direction can be changed.

In one embodiment, the electrical trimmer may be battery-powered. This gives the opportunity of the handheld trimmer to be wireless.

In one embodiment may the rotary cutting equipment comprise cutting line for cutting the grass or other vegetation. An alternative may be knife blades in the cutting equipment. The knife blades would then need to be double-sided, and the cutting line may therefore be an easier and cheaper alternative.

The rotary cutting equipment may in one embodiment be attached to the trimmer by snapping means. Since the rotary cutting equipment is rotating both clockwise and counterclockwise, a threaded connection between the cutting equipment and the trimmer is not possible. The cutting equipment would come loose. When attached by a snapping function, the cutting equipment may rotate in any direction and still be attached.

In one embodiment, the electrical trimmer may further comprise a trim shield. The trim shield may be attached to the trimmer close to the rotary cutting equipment for protective function during trimming.

The trim shield may in one embodiment be symmetrically arranged on the trimmer for protective function. By symmetrically arranged means that the trim shield has the same protective function during both clockwise and counterclockwise rotation direction of the cutting equipment.

In another embodiment, the trim shield may comprise at least two knives. The knives may be arranged on the side of the trim shield facing the cutting equipment. When using line for the cutting function in the cutting equipment, the line may during use be worn and get shorter. The cutting equipment may be designed to feed out line when the cutting equipment is tapped to the ground. When doing this, the line might get too long so that it damages the trim shield during rotation of the cutting equipment. The purpose of the knives on the trim shield are to shorten the line so that it gets the correct length. When the line rotates against the trim shield, the knives cut off the outermost part of the line.

In a further embodiment the at least two knives may be arranged opposite to each other on the trim shield. In this way the grass cutting line in the cutting equipment may be kept short enough when rotating both clockwise and counterclockwise.

### Brief description of the drawings

In the following, an embodiment will be described in more detail with reference to the accompanying drawings.
Fig. 1 is a perspective view of the bottom part of the electrical trimmer.
Fig. 2 is a top view of the rotary cutting equipment, the motor and the trim shield attached to the electrical trimmer.
Fig. 3 is a perspective view of an embodiment of the electrical trimmer.
Fig. 4 is a perspective view of a control part of the electrical trimmer.

### Detailed description

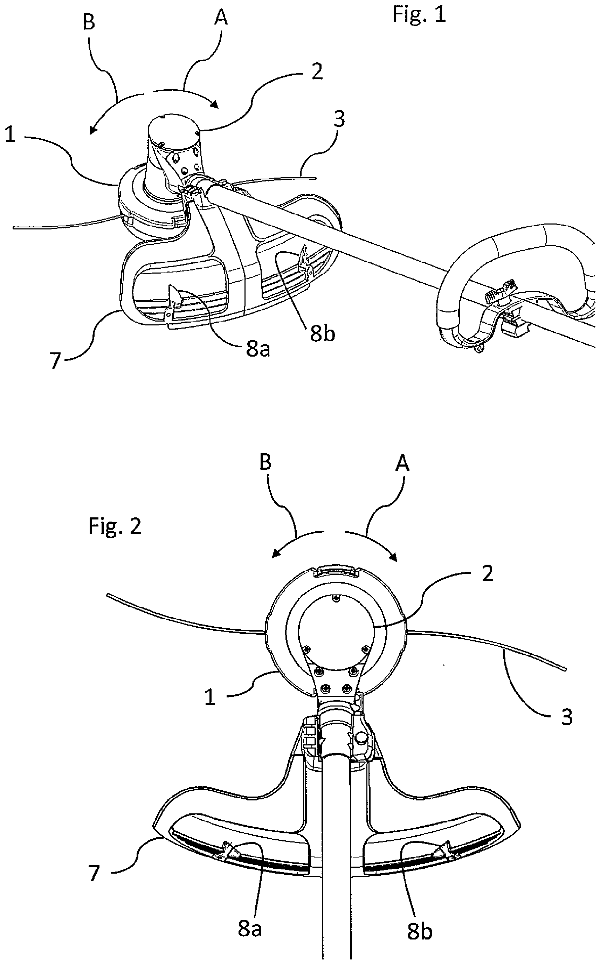

In Fig 1 to 4 an electrical trimmer 20 is shown. With reference to Figs 1 and 2, a bottom part of the electrical trimmer comprises a rotary cutting equipment 1, a motor 2 and a trim shield 7. The rotary cutting equipment 1 comprises a cutting line 3 that cuts the grass or other vegetation.

The rotary cutting equipment 1 may, in another embodiment, comprise a knife blade instead of a cutting line. The knife would then need to be sharpened on both sides of the blade.

When using line 3 in the cutting equipment 1, the cutting equipment 1 may, in a known manner, comprise line 3 winded on a spool inside the cutting equipment 1. When the cutting equipment 1 is tapped to the ground, more line 3 may be fed out.

The rotary cutting equipment 1 may be attached to the trimmer 20 by a snapping function. Since the cutting equipment 1 may rotate both clockwise A and counterclockwise B, it can not be attached to the trimmer by a threaded connection. It would come loose when rotating in the same direction as the threads are turning. Other attachment solutions providing the same funcionality during clockwise and counterclockwise rotations may also be possible.

The cutting equipment 1 is connected to the motor 2, which drives the cutting equipment 1 and controls the speed and direction of the cutting.

A trim shield 7 may be arranged on the trimmer behind the rotary cutting equipment 1. The trim shield 7 may be a protection for the cut grass that is thrown away from the cutting equipment 1. The trim shield 7 may be designed to direct the cut grass in a certain way. Since the line 3 may rotate both clockwise A and counterclockwise B, the trim shield 7 may be symetrically arranged to give the same protective function for both rotation directions. The trim shield 7 may also have a protective function for the user against the rotating line 3. The line 3 could otherwise cause injury to the user if his or her feet get hit by the line 3.

When tapping the trimmer to the ground to feed out more line, the line 3 may get too long so that it will hit the trim shield 7 when rotating. To prevent damage to the trim shield 7, it may be provided with knives 8a, 8b that cut off the outermost part of the line 3. To cut off the line 3 both when it rotates clockwise A and when it rotates counterclockwise B, there may be at least two knives, and these two knives may be arranged in opposite direction to each other. One knife 8a may cut the line when the line 3 rotates clockwise A and the other knife 8b may cut the line when the line 3 rotates counterclockwise B.

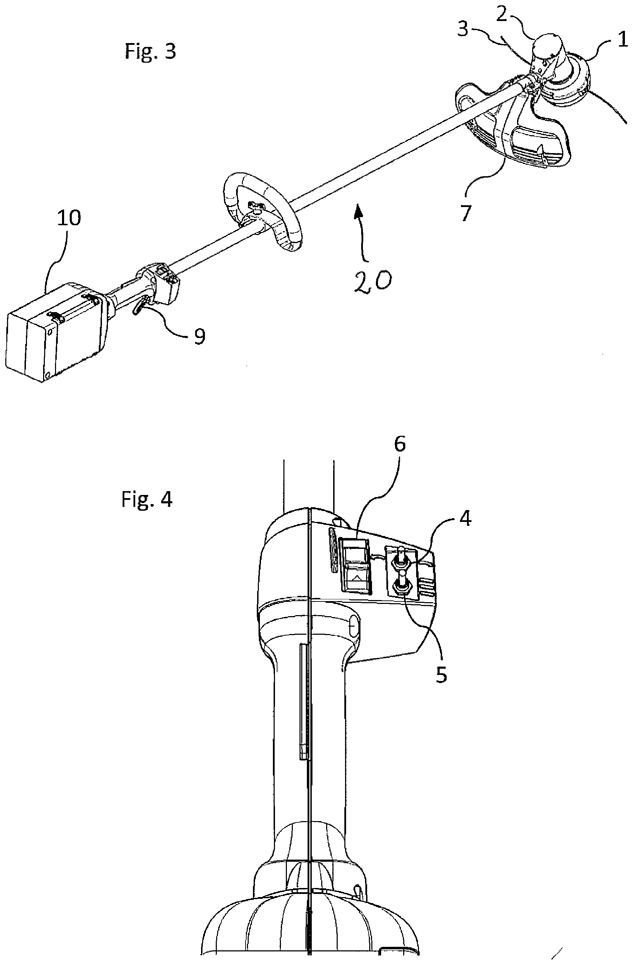

Referring to Figs 3 and 4, the electrical motor 2 may be battery-powered by a battery pack 10 arranged on a upper part of the electrical trimmer. On the upper part of the electrical trimmer may a control part be arranged. The control part comprises means for powering the motor 2 and controlling the rotation direction of the motor 2. There may be a main switch 6 to turn on the powering of the motor 2. The means for changing rotation direction of the motor may comprise a switch 4 that may be switched to the right or to the left for clockwise A or counterclockwise B rotation of the motor 2. There may further be a speed control switch 5 for different speed levels of the motor 2 and a speed control handle 9 for controlling the speed of the motor 2 rotation during operation.

Since the trimmer is provided with an electrical motor 2, the rotation direction change may be done with a simple switch 4, changing the polarity of the power from the battery pack 10 that drives the motor. This includes that the change of direction may be done instantly during operation of the trimmer 20, without a need for turning the trimmer 20 off.

## Claims

1. Electrical trimmer for rotary cutting comprising,
a rotary cutting equipment (1) comprising cutting line (3) that is rotatable to perform the same cutting function regardless of a direction of rotation of the rotary cutting equipment (1) relative to grass or other vegetation,
an electrical motor (2) for driving the rotary cutting equipment (1), and
a trim shield (7) arranged proximate to the rotary cutting equipment (1),
**characterized in that**
the electrical trimmer (20) comprises a switching means (4) for changing the rotational direction of the electrical motor (2) drive, during operation of the rotary cutting equipment (1), between clockwise (A) and counterclockwise (B) rotation for rotation of the rotary cutting equipment (1), and
wherein the trim shield (7) is symmetrically arranged for protecting an operator from the cutting line (3) and for directing cut grass or other vegetation in a certain direction during both clockwise (A) and counterclockwise (B) rotation of the rotary cutting equipment (1), the trim shield (7) including two knives (8a, 8b) arranged thereon in opposite directions relative to each other to trim the cutting line for both clockwise (A) and counterclockwise (B) rotation of the rotary cutting equipment (1).

2. Electrical trimmer according to claim 1, wherein the electrical trimmer (20) is battery-powered.

3. Electrical trimmer according to any of the preceding claims, wherein the rotary cutting equipment (1) is attached to the electrical trimmer (20) by snapping means.

4. Electrical trimmer according to claim 1, wherein the electrical trimmer (20) is configured to release additional cutting line (3) responsive to tapping of the electrical trimmer (20) on the ground.

5. Electrical trimmer according to claim 1, wherein the electrical trimmer (20) comprises a main power switch (6) to control application of battery power to the electrical motor (2), a direction switch (4) to control direction of rotation of the rotary cutting equipment (1), and a speed switch (5) to control a speed of rotation of the rotary cutting equipment (1).

6. Electrical trimmer according to claim 1, wherein the electrical trimmer (20) comprises a direction switch (4) that changes polarity of power provided from a battery pack to the electrical motor (2) to change a direction of rotation of the rotary cutting equipment (1) without turning the electrical trimmer (20) off.

## Patentansprüche

1. Elektrischer Trimmer zum drehenden Schneiden, umfassend:
eine Drehschneidvorrichtung (1) umfassend einen Schneidfaden (3), der drehbar ist, um dieselbe Schneidfunktion unabhängig von einer Drehrichtung der Drehschneidvorrichtung (1) relativ zu Gras oder anderer Vegetation auszuführen,
einen Elektromotor (2) zum Antreiben der Drehschneidvorrichtung (1), und
eine Trimmabschirmung (7), die in unmittelbarer Nähe der Drehschneidvorrichtung (1) angeordnet ist, **dadurch gekennzeichnet, dass** der elektrische Trimmer (20) ein Schaltmittel (4) zum Ändern der Drehrichtung des Antriebs des Elektromotors (2) während des Betriebs der Drehschneidvorrichtung (1) umfasst, zwischen einer Drehung im Uhrzeigersinn (A) und einer Drehung gegen den Uhrzeigersinn (B) zur Drehung der Drehschneidvorrichtung (1), und
wobei die Trimmabschirmung (7) symmetrisch angeordnet ist, um einen Bediener vor dem Schneidfaden (3) zu schützen, und um geschnittenes Gras oder andere Vegetation in einer bestimmten Richtung zu lenken, sowohl während der Drehung im (A) und gegen den Uhrzeigersinn (B) der Drehschneidvorrichtung (1), wobei die Trimmabschirmung (7) zwei Messer (8a, 8b) umfasst, die daran in relativ zu einander entgegengesetzten Richtungen angeordnet sind, um den Schneidfaden zur Drehung sowohl in (A) als auch gegen den Uhrzeigersinn (B) der Drehschneidvorrichtung (1) zu trimmen.

2. Elektrischer Trimmer nach Anspruch 1, wobei der elektrische Trimmer (20) batteriebetrieben ist.

3. Elektrischer Trimmer nach einem der vorhergehenden Ansprüche, wobei die Drehschneidvorrichtung (1) an dem elektrischen Trimmer (20) durch Einschnappmittel angebracht ist.

4. Elektrischer Trimmer nach Anspruch 1, wobei der elektrische Trimmer (20) dazu ausgestaltet ist, in Ansprechen auf das Aufdrücken des elektrischen Trimmers (20) auf den Boden mehr Schneidfaden (3) freizugeben.

5. Elektrischer Trimmer nach Anspruch 1, wobei der elektrische Trimmer (20) einen Hauptschalter (6) umfasst, um das Anlegen von Batterieleistung an den Elektromotor (2) zu steuern, sowie einen Richtungsschalter (4), um die Drehrichtung der Drehschneidvorrichtung (1) zu steuern, und einen Drehzahlschalter (5), um eine Drehzahl der Drehschneidvorrichtung (1) zu steuern.

6. Elektrischer Trimmer nach Anspruch 1, wobei der elektrische Trimmer (20) einen Richtungsschalter (4) umfasst, der die Polarität der Leistung, die von einem Batteriepaket an den Elektromotor (2) geliefert wird, verändert, um eine Drehrichtung der Drehschneidvorrichtung (1) zu verändern, ohne den elektrischen Trimmer (20) abzuschalten.

## Revendications

1. Taille-bordure électrique de coupe rotative comprenant,
un équipement de coupe rotative (1) comprenant une ligne de coupe (3) qui peut tourner pour effectuer la même fonction de coupe indépendamment d'une direction de rotation de l'équipement de coupe rotative (1) par rapport à l'herbe ou à d'autre végétation,
un moteur électrique (2) pour entraîner l'équipement de coupe rotative (1), et
un élément de protection lors de la taille (7) agencé à proximité de l'équipement de coupe rotative (1),
**caractérisé en ce que**
le taille-bordure électrique (20) comprend un moyen de commutation (4) pour changer la direction de rotation de l'entraînement par le moteur électrique (2), au cours du fonctionnement de l'équipement de coupe rotative (1), entre la rotation dans le sens des aiguilles d'une montre (A) et la rotation dans le sens inverse des aiguilles d'une montre (B) pour une rotation de l'équipement de coupe rotative (1) et
dans lequel l'élément de protection lors de la taille (7) est symétriquement agencé pour protéger un opérateur de la ligne de coupe (3) et pour diriger l'herbe ou une autre végétation coupée dans une certaine direction au cours à la fois de la rotation dans le sens des aiguilles d'une montre (A) et de la rotation dans le sens inverse des aiguilles d'une montre (B) de l'équipement de coupe rotative (1), l'élément de protection lors de la taille (7) comportant deux couteaux (8a, 8b) agencés sur celui-ci dans des directions opposées l'un par rapport à l'autre pour couper la ligne de coupe pour à la fois la rotation dans le sens des aiguilles d'une montre (A) et la rotation dans le sens inverse des aiguilles d'une montre (B) de l'équipement de coupe rotative (1).

2. Taille-bordure électrique selon la revendication 1, dans lequel le taille-bordure électrique (20) est alimenté par batterie.

3. Taille-bordure électrique selon l'une des revendications précédentes, dans lequel l'équipement de coupe rotative (1) est fixé au taille-bordure électrique (20) par un moyen d'encliquetage.

4. Taille-bordure électrique selon la revendication 1, dans lequel le taille-bordure électrique (20) est configuré pour libérer une ligne de coupe supplémentaire (3) en réponse au contact du taille-bordure électrique (20) avec le sol.

5. Taille-bordure électrique selon la revendication 1, dans lequel le taille-bordure électrique (20) comprend un commutateur d'alimentation principal (6) pour commander l'application d'une alimentation par batterie au moteur électrique (2), un commutateur de direction (4) pour commander la direction de rotation de l'équipement de coupe rotative (1), et un commutateur de vitesse (5) pour commander une vitesse de rotation de l'équipement de coupe rotative (1).

6. Taille-bordure électrique selon la revendication 1, dans lequel le taille-bordure électrique (20) comprend un commutateur de direction (4) qui change la polarité de l'alimentation fournie par un bloc-batterie au moteur électrique (2) pour changer une direction de rotation de l'équipement de coupe rotative (1) sans éteindre le taille-bordure électrique (20).
